# EUROPEAN PATENT APPLICATION

(11) **EP 1 655 672 A1**
(43) Date of publication of application: **10.05.2006**
(21) Application number: 04368071.9
(22) Date of filing: 03.11.2004
(51) Int. Cl.: G06F 17/27, G06F 17/22

(54) **Process for automatically analyzing a page formalized in a markup-language and for detecting correlation between objects therein included**

(71) Applicant: Indigen Solutions SARL, 06904 Sophia Antipolis (FR)
(72) Inventor: Gutierrez, Michel, 06130 Grasse (FR)
(74) Representative: Schuffenecker, Thierry

(57) **Abstract**

Process for automatically analysing a page formalized in markup language comprising tags and for automatically detecting correlation between at least a first and a second node therein included, said process comprising the steps of:
- determination (22) of a first Identification Path of said at least first node, said first Identification Path comprising a sequence of couples Ci, where Ci = (TAG, INDEX)
- determination (23) of a second Identification Path of said at least second node, said second Identification Path comprising a sequence of couples C'i, where C'i = (TAG'(i), INDEX' (i))
- performing a comparison (24, 25) of said first Identification and said second Identification Paths in order to determine one unique difference, said difference occuring only in one index INDEX (k);
- upon detection of one unique difference, returning (26) said nodes as being co-related.

## Description

### Technical field of the invention

The invention relates to telecommunications and the Internet network and more particularly to a process for automatically analyzing a HTML page or XML page and for detecting correlation between objects therein included.

### Background art

The Internet - or intranet - network and the World Wide Web have been subject of a huge development. The web has become the basic and predominant way for publishing and disseminating information throughout the world and, today, no industrial nor business company or organization of any importance is developing its activities without elaborating a web site. The impact of the Internet is such that any computer which is marketed in the world is now fitted with an information access/management tool such as a browser, for instance Netscape manufactured by Netscape Inc., or Internet Explorer (manufactured by Microsoft Corporation of Redmond, Washington, U.S.A.). The browser is used for accessing the Internet network and constitutes the heart of the interaction between the latter and the user's machine. New additional plug-in codes are continuously enriching and expanding the browsers with new functions and new capabilities.

In parallel, the *HyperText Mark-up Language* (HTML) format has become a standard for publishing the information through the world. The HTML format, which is derived from the previous Standardized General Markup Language (SGML) format, has shown to be adapted for the transmission and the publication of basic and relatively static information. Thanks to the Hypertext link properties of HTML document, the general public is be given an effective tool for accessing to the web site of any company.

While HTML is the predominant markup language on the web, some other XML-based markup languages are making their way with more powerful or specialized features. Among those, one can mention xHTML (XML-based HTML), WML (Wireless Markup Language), XUL (XML-based User-interface Language), XAML (eXtensible Application Markup Language).

The generalization of Internet as a prominent tool for publishing and disseminating information throughout the world has resulted in the development of new companies specialized in web editing and providing development and maintenance services of web sites.

The maintenance of a pre-existing web site, and particularly its migration, requires the need to extract the navigation, or other structured information, existing within the HTML page and such work might become a burden when the size of the pre-existing web site extends over several thousands of HTML pages.

In such cases, there is a clear need for specialized tools for assisting web designers to automatically analyse the contents of pre-existing HTML pages, and more particularly for detection of correlation between objects therein included.

Known techniques are generally only dedicated to the problem of extraction data from preexisting web site, and do not relate to the problem of detecting correlation and relationship between objects included within such pages.

Such analysis and correlation detection may be of great utitilty for performing subsequent operations, and facilitating migration of said web site.

Detection of correlation may also be useful for enriching search engines techniques.

### Summary of the invention

It is an object of the present invention to improve the possibilities of automatic analysis of pages formalized in a markup langage.

It is another object of the present invention to provide an analysis tool for a page formalized in markup language which can automatically detect correlation between objects therein included.

It is a further object of the present invention to provide a process for analysing a HTML page and for automatically detecting objects which are in alignment within said page.

It is another object of the present invention to provide a process for identifying functional alignment of objects within a HTML page and for returning an alignment characteristics path for said alignement which can be used by subsequent operations.

It is still another object of the present invention to provide a process which improves the search possibilities in search engines by search correlated objects.

These objects are achieved by a process for automatically analysing a page formalized in markup language based on a hierarchichal structure comprising tags and for automatically detecting correlation between at least a first and a second node therein included.

The process involves the steps of:
- determination of a first Identification Path of said at least first node, said first Identification Path comprising a sequence of couples Ci, where Ci = (TAG, INDEX)
- determination of a second Identification Path of said at least second node, said second Identification Path comprising a sequence of couples C'i, where C'i = TAG'(i), INDEX' (i))
- performing a comparison of said first Identification and said second Identification Paths in order to determine one unique difference, said difference occuring only in one index INDEX (k);
- upon detection of one unique difference, returning said nodes as being co-related.

The process is very well adapted to the processing of HTML or XML pages.

In one preferred embodiment, the process can be directly used for detecting alignments within an HTML page, or a part of this page, and therefore identifying nodes which belong to a same hierarchical level within the navigation process.

Preferably, the process issues one Alignement Vector identifying, with one special mark (*) , the Identification Path representative of said detected correlation.

The first and said second Identification Path comprises an ordered sequence of couples representing the hierarchical structure of said HTML page, each couple comprising a TAG and an INDEX. The tags can be possibly be associated with one or more attributes.

In one embodiment, the Identification Path are formalized based on the known XPATH standard.

Preferably, the process can be used for analysing part of a page formalized in mark-up langage, by means of pointing cursor which allows selection of a first and a second node within the HTML page, which are then identified through their corresponding Identification Path.

In one embodiment, the invention provides a process for performing a sequential analysis of all the pages comprised within a web site, said analysis resulting in detection of alignments of hyperlinks existing in said pages. This permits to generate a representation of the web site and reconstruct the navigation structure which is representative of said web site.

Alternatively, and independently of the detection of alignment, there is provided a searching process applicable to a set of pages characterized in that if further involves:
- storing at least a first and a second key-expressions,
- applying a search engine for retrieving pages containing said at least first and second key-expression;
- performing a correlation detection step (707) on each page retrieved in order to detect a correlation between said at least first and second key-expressions within said page;
- in response to the detection of said correlation, performing a correlation extrapolation step in order to identify additional key expressions.

This permits to issue new key-expressions having the same degree or level of correlation than the two key-expressions. It should be observed that the process is applicable even for searching pages which are not formalized in markup languages.

However, clearly, the preferred embodiment is applicable to a search engine for searching pages which are formalized in a markup language based on a hierarchical structure comprising tags, and where the detection of the correlation between said at least first and second key-expressions involves the steps of :
- determination (22) of a first Identification Path of said at least a first node embedding said at least first key-expression, said first Identification Path comprising an ordered sequence of couples Ci, where Ci = (TAG, INDEX)
- determination (23) of a second Identification Path of said at least second node embedding said at least second key-expression, said second Identification Path comprising an ordered sequence of couples C'i, where C'i = (TAG'(i), INDEX' (i))
- performing a comparison (24, 25) of said first Identification Path and said second Identification Path in order to determine one unique difference, said difference occurring only in one index INDEX (k);
- upon detection of one unique difference, returning (26) said nodes as being co-related.

### Description of the drawings

An embodiment of the invention will now be described, by way of example only, with reference to the accompanying drawings, wherein:
Figure 1a illustrates an example of an HTML page comprising aligned objects.
Figure 1b illustrates an hierarchical representation of the HTML page tags of figure 1.
Figure 2a illustrates a process for automatically analyzing an HTML page according to the present invention
Figure 2b illustrates a process for searching pages in accordance with the present invention.
Figure 3 illustrates one embodiment of the process of the present invention where two nodes can be processed and correlation between those can be detected, with the returning of an Alignment Vector which is characteristic of that detection.
Figure 4 is a flow chart illustrating the processing of any node contained within a HTML page and for comparing said node to said Alignment Vector.
Figure 5 is a flow chart illustrating a process for identifying all the alignment patterns within a HTML page.
Figure 6 is a flow chart illustrating the use the process of the invention in a search engine process.

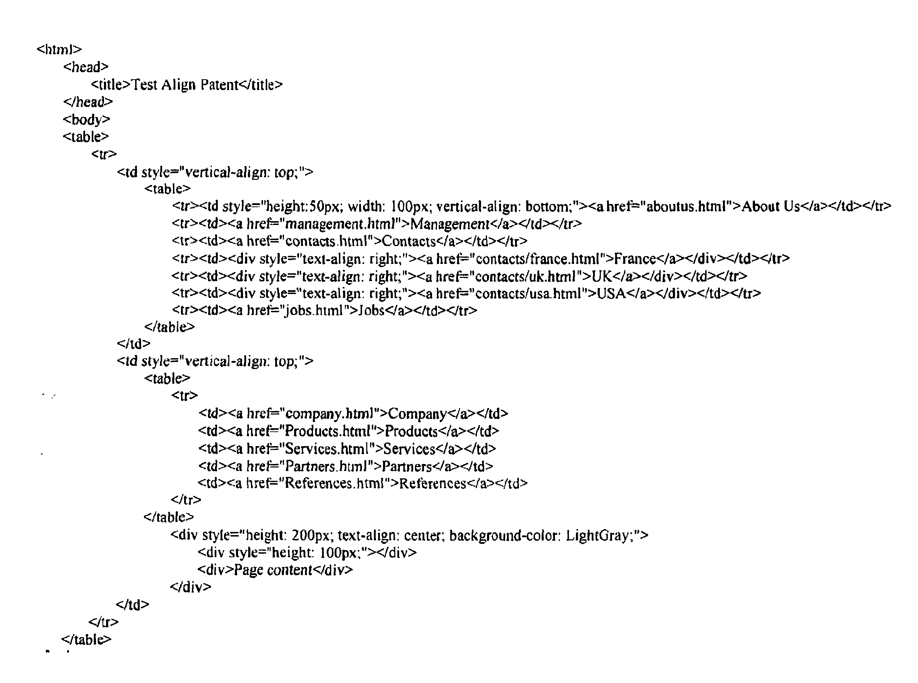

Figure 7 shows the source code of the HTML page which is represented in figure 1.

### Description of the preferred embodiment of the invention

The process and apparatus will be more particularly described in reference with a process for analyzing a page which is formalized in a markup language. Cleady, the example will be described in reference with the well known HTML markup format since it is that format which is , nowadays, generalized. However, it is clear that the skilled man will straightforwardly adapt the process to any markup langage, and for instance XML-based HTML (XHTML) , XML-based User-interface Language (XUL), Wireless Mark-up Language (WML) , Extensible Application Mark-up Language (XAML) and more generally any mark-up language which is based on the use of tags within a hierarchical structure .

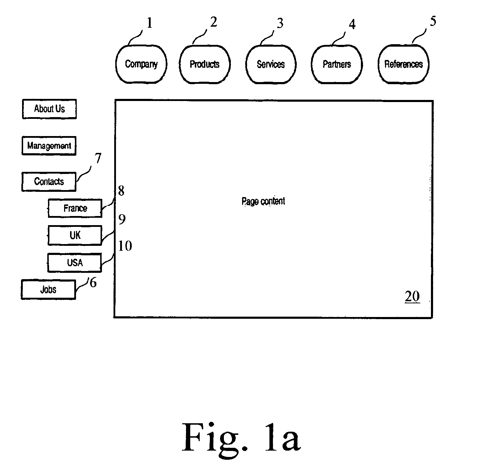

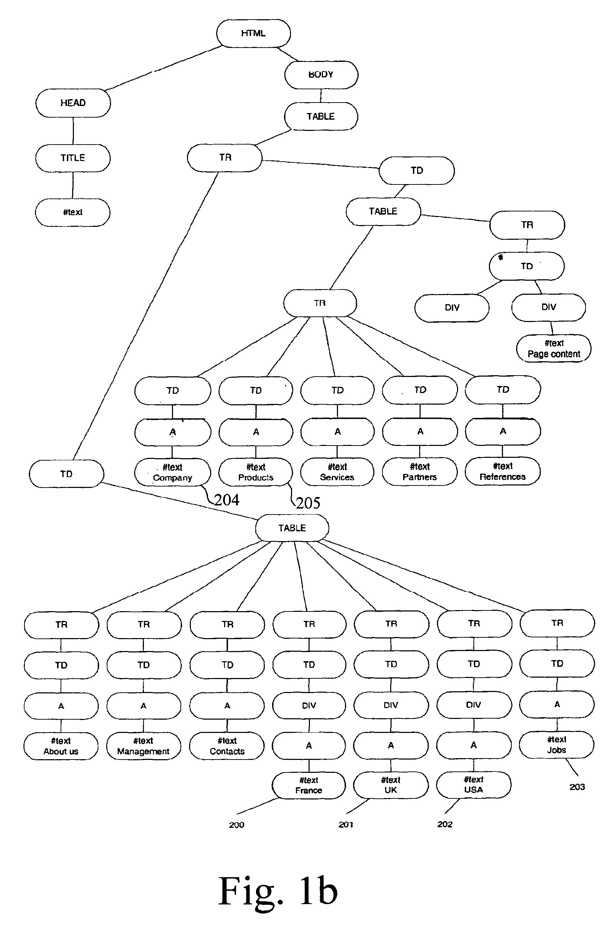

Considering the case of the HTML format, any HTML page, such as the one illustrated in figure 1a is based on a hierarchical structure such as shown in figure 1 b, and which is based on the use of different tags.

Figure 1 a shows an HTML page which comprises a area 20 with page content and further includes a set of buttons 1-10, some of which are aligned (buttons 1-5 and also button 8-10). The buttons generally refer to hyperlinks usable for returning additional information regarding to the particular area (Company, Products, Services etc...) which may be of interest for the user and the aligned buttons correspond to correlated elements of information which are of great importance in the perspective of web site migration. Indeed, it is this type of information, the functional alignment of some elements within the HTML page, which has to be restructured in a newly designed web site in case of migration.

Figure 1 b shows the development of the hierarchical structure corresponding to the - very simple - HTML page of figure 1. It can be seen that the page comprises a set of HTML Tags which label the different nodes within the hierarchichal or tree structure and which can be possibly associated with attributes (non represented in the figure), such as follows:
HTML:
BODY:
TABLE:
TR: (Table Row)
TD: ( Table Data )
DIV etc...

More specifically, the example of figure 1b illustrates nodes 200-205 which respectivelly results in the display of links "FRANCE" , "UK", "USA", "JOBS", "COMPANY" and "PRODUCTS" in the figure 1.

Those are only non-limiting examples it should be noticed that the invention encompasses all the future tags which are likely to be introduced in the HTML format and, also, the process which will be described hereinafter is applicable for any other type of markup languages organized as a tree structure.

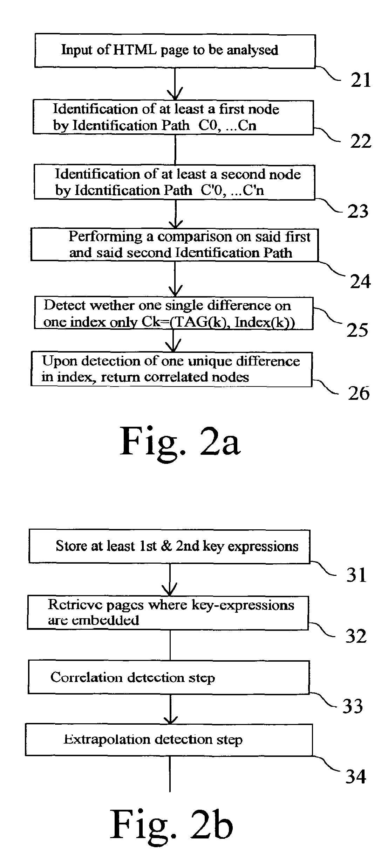

Figure 2a shows the general principle of a process according to the present invention for automatically analyzing such a HTML page - or any general page drafted in markup-language, for the purpose of detecting correlation between two particular nodes or elements, such as the nodes COMPANY, PRODUCTS, SERVICES, PARTNERS of figures 1 a and 1 b.

The process starts with a step 21 where the mark-up page to be analyzed in entered within the storage of the system for its processing.

The process then proceeds with a step 22 where at least one first node is being processed for the purpose of returning a so-called Identification Path (IP) which consists in an ordered sequence of couples Ci , with i= 1 to n , representing the position of the considered node within the hierarchichal structure illustrated in figure 1 b.

The IP thus corresponds to a sequence C0, C1, C2, ... Ci, ...... Cn where
Ci = ( TAG(i), Index (i))

TAG(i) is generally a name which is assigned to the node within the hierarchical structure. In its simplest form, TAG may be the name of the element (for instance TABLE, TR or DIV). In a more complex form, It also integrates the HTML or XML attributes and respective values associated with this element.
Index(i) being the particular Index associated to the node.

Considering for instance node 204 (corresponding to COMPANY node) represented in figure 1b, the latter will be identified by the following sequence of couples forming the Identification Path:
(HTML,1), (BODY, 1), (TABLE, 1), (TR, 1), (TD, 2), (TABLE, 1), (TR, 1), (TD, 1), (A, 1), (#TEXT, 1)

While, for the sake of clarity, the COMPANY node 204 has no further nodes below it, it is clear that the Identification Path encompasses all the couples, above (up to the top of the HTML page) and below the considered node.

In a step 23, the process proceeds with a similar process of at least a second node for the purpose of returning a second Identification Path consisting of an ordered sequence of couples C'i = ( TAG'(i), Index' (i)). Considering the example of node 205 (node PRODUCTS) of figure 1 a and 1b, step 23 will return the following Identification Path:
(HTML,1), (BODY, 1), (TABLE, 1), (TR, 1), (TD, 2), (TABLE, 1), (TR, 1), (TD, 2), (A, 1), (#TEXT, 1)

It should be noticed that, in the preferred embodiment, the Identification Path consists of a string of character for identifying the sequence of couples Ck defining the development of the hierarchical tree.

While the IP may take different practical forms, it should be noticed that, in one embodiment, the Identification Path can be formalized by means of the well known XPATH standard, such as defined by the W3C organization. Indeed, while the XPATH standard is classically used for generating a request to a XML structure, for the purpose of returning nodes satisfying the particular requirements defined in the request, such XPATH format can also be used for a novel application consisting of returning the Identification Path of one or more nodes included in a HTML page (or any more general markup page).

When formalized with the XPATH standard, the Identification Path of node 4 might take the following form:
/html[1]/body[1]/table[1]/tr[1]/td[2]/table[1]/tr[1]/td[1]/a[1]/text()[1]

While that of node 5 is:
/html[1]/body[1]/table[1]/tr[1]/td[2]/table[1]/tr[1]/td[2]/a[1]/text()[1]

Returning again to the process of figure 2a, the process proceeds then with a step 24 where a processing is performed on the two Identification Path of the first and second node, based on a successive comparison of corresponding couples Ci and C'i of the two Identification Paths.

In a step 25, the process detects whether one single difference occurs in one single couple Ck and C'k of the respective two identification paths and whether, in said two couples Ck and C'k, the different only occurs on the index.

This means that the process returns a positive status when all tags and indexes are the same in the two Identification Paths, except one index which is different, what is the case with node 4 and node 5 since the last indexes of the last couple of the two Identification Path differ from each other.

In a step 26, upon detection of one unique difference in index, the process then returns the two nodes as satisfying co-related.

Practically, this means that the designer of the web page has put the two nodes on a similar level of significance within HTML page, with similar formatting tags, and that such information is most useful in the perspective of migration of a web site, for instance.

The process which was described in reference with figure 2a can be embodied in very different ways, and be applicable for different applications.

In order to demonstrate how useful can be the process, there will now be described two particular embodiments of the invention.

In one embodiment, the process will provide detection of functional alignment of objects within a HTML page, such detection of alignment being an essential step in the application of web migration (1).

Alternatively, the process will provide an enhanced search engine technique (2) .

### 1. Detection of alignments of nodes in a HTML page

The process of figure 2a can be used for detecting close relationship between two nodes existing into an HTML page, or any page drafted in mark-up language. Such co-related nodes are automatically aligned upon loading and interpretation of the HTML page in any browser (such as illustrated in figure 1a, demonstrating that nodes COMPANY, PRODUCTS, SERVICES etc... are aligned).

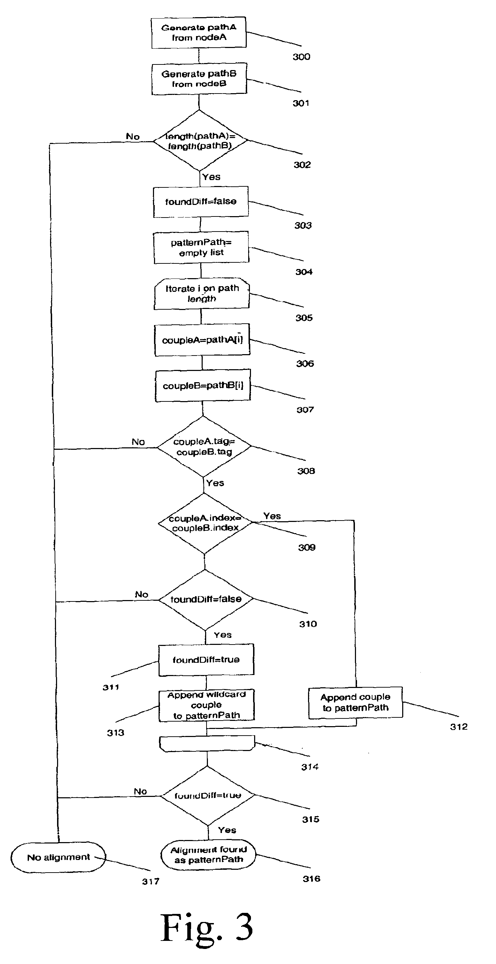

With respect to figure 3, there will now be described a process which can be used for automatically processing two particular nodes within a HTML page, and for detecting whether such nodes are aligned and, when so, for returning an Alignment Vector which is characteristics of the alignment pattern.

The process starts with a step 300 where the process issues the Identification Path (called PathA) which is representative of one first node A. Identification of the node A, prior to the computation of the Identification Path, can be performed in many different ways, for instance, in one embodiment of the invention, by means of a -right-click based feature within the Browser software which permits the selection (and highlighting) of one particular node.

In a step 301 the process performs the computation of the Identification Path for a second node B.

In a step 302, the process performs a step in order to compare the length of the two Identification Paths. If such comparison shows a difference in the two lengths, then the process directly proceeds with a step 317 where it completes, returning the status "no alignment".

If the comparison of step 302 shows equality in the length of the two Identification Paths, then the process proceeds with a step 303 where a first so-called variable *FoundDiff* is initialized and its value is set to a status FALSE.

In a step 304, a so-called *PatternPath* list is initialized to be empty.

In a step 305, the process iterates variable i, with i = 1 to n with n being the common length of the Identification Paths.

In a step 306, the process loads a variable Couple A with the contents of the i^{th} couple of the Identification Path for node A.
CoupleA = pathA(i)
In a step 307, the process performs a similar operation with node B and loads the couple i of the Identification Path for node B into variable CoupleB:
Couple B = pathB (i)
In a step 308, the process performs a test for comparing the tags of the two couples Ci for the two nodes.
CoupleA.tag = CoupleB.tag ?
If the two tags are different, then the process proceeds to step 317 where a NO Alignment condition is returned.
If the two tags are identical, then the process proceeds with a step 309 where a test is performed in order to determine whether the two indexes associated to the i^{th} couple are identical or not.
It should be observed that, when the considered tag includes XML or HTML attributes, the comparison which is performed above is made irrespectively with the the particular order of presentation of the attributes composing the nodes. Therefore, a tag "TABLE WIDTH=200 HEIGHT =100" will be regarded as equal to a tag "TABLE HEIGHT=100 WIDTH = 200" in the comparison step above. Such observation shall also apply for any comparison which will be described below.
CoupleA.index = CoupleB.index ?
If the two indexes are identical, then the process proceeds to a step 312 where the considered couple Ci is appended to the list *PatternPath,* and then the process proceeds to a step 314 which completes the processing of the iteration i.
If the two indexes are different, then the process proceeds with a step 310 where variable *FoundDiff* is checked against the value *false.* If this test is false, meaning this is not the first index difference, then the process proceeds to step 317 where a NO Alignment condition is returned.
If variable FoundDiff is false, the process proceeds with a step 311 where variable *FoundDiff is* set to TRUE and the process then proceeds to a step 313 where a couple with tag coupleA.tag and as index, a predetermined character - for instance the wildcard character "*" -, is appended to the PatternPath list.
The process then proceeds to step 314 which completes the iteration of the i^{th} Couple and a new couple C(i+1) is then loaded for further processing.
When all the couples of the Identification Paths were considered, the process then proceeds with a step 315 which is a test for determining whether *FoundDiff* variable is True or not.

If variable *FoundDlff* is True, this means that the two nodes are found in a step 316 to be co-related and, thus in alignment. Otherwise, the process goes to step 317 where no alignment is returned.

It should be noticed that *PatternPath* list returns an alignment Vector which is characteristics of the alignment between the two nodes A and B. Alignment Vector will be usable for checking any other nodes.

For the sake of clarity, one can apply the process of figure 3 on the nodes represented in Figure 1 and one shows that:
Node 9 of figure 1 a which displays **"UK"** has the Identification path: ( (HTML,1), (BODY,1), (TABLE,1), (TR,1), (TD,1), (TABLE,1), (TR,5), (TD,1), (DIV,1), (A,1), (#text,1))
Node 8 displaying **"France"** has the following Identification Path: ( (HTML,1), (BODY,1), (TABLE,1), (TR,1), (TD,1), (TABLE,1), (TR,4), (TD,1), (DIV,1), (A,1), (#text,1))
The only difference between both IP is the index of the 7th couple, 4 in one case, 5 in the other one
So those nodes are considered as aligned and the alignment pattern returned by the process is (HTML,1), (BODY,1), (TABLE,1), (TR,1), (TD,1), (TABLE,1), (TR,*), (TD,1), (DIV,1), (A,1), (#text,1)). It should be noticed that the character '*' is used as a wildcard to indicate that any index value at this place is acceptable. Any other character can be used by the skilled man.
The node 10 displaying **"USA"** has the Identification Path ( (HTML,1), (BODY,1), (TABLE,1), (TR,1), (TD,1), (TABLE,1), (TR,6), (TD,1), (DIV,1), (A,1), (#text,1)), so it also belongs to the previous alignment
The node 6 displaying "Jobs" has the position ( (HTML,1), (BODY,1), (TABLE,1), (TR,1), (TD,1), (TABLE,1), (TR,7), (TD,1), (A,1), (#text,1) ). It does not have the couple with the "DIV" tag, so it is not in the alignment with the preceding one.

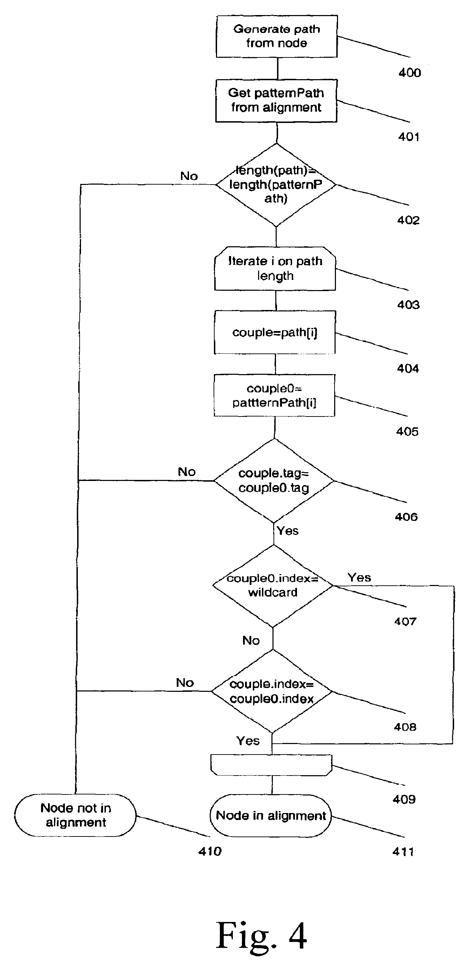

With respect to figure 4 , there is now described a process which can be used for processing any node and determine whether said node is aligned with a predetermined Alignment Vector.

The process starts with a step 400 where the node to be checked is identified by returning its Identification Path (loaded into variable *Path)* as defined above.

In a step 401, the process then loads one Alignment Vector which is contained in the variable *PatternPath* which was defined in the process of figure 3 above.

The process then proceeds with a step 402 where a test is performed in order to determine whether the length of the Identification Path of the node to be checked is equal or not to the length of the Identification Vector:
Length (*Path*) = length *(PatternPath) ?*

If the lengths are not equal , then process proceeds with a step 410 where the node to be checked is considered as being Not in alignment with the predetermined Alignment Vector.

If the lengths are equal, then the process proceeds with a step 403 which is the initialization of an iteration i on the length of the Identification Path (variable *Path*)

In a step 404, the process loads in a variable (identified as *couple )* the value of the i^{th} couple of the Identification Path of the node to be checked.
*Couple* = path (i)

In a step 405, the process loads into a variable couple0 the value of the i^{th} couple of the Alignment Vector to which the node has to be checked:
*Couple0 = PatternPath (i)*

In a step 406, the process performs a step for determining whether the tag of the corresponding couple i is equal or not to the corresponding tag of the Identification vector:
*Couple.tag* = *Couple0. tag ?*

If they are not equal, then the process proceeds with step 410 where the node to be checked is returned as being not in alignment with the considered Alignment vector.

If the two values are found to be equal in step 406, then the process proceeds with a step 407 where a new test is performed in order to determine whether the index of the considered i^{th} Couple is the wildcard (or any other character chosen in the process of figure 3 to correspond to the index which can vary within the alignment).

If the index is found to be equal to the wildcard, then the process proceeds with a step 409 which is the completion of the processing of the i^{th} couple and the process then gets back to the next i^{th} couple to process.

If the index is not the wildcard, then the process proceeds to a step 408 where a test is performed to determine whether the index of the Identification Path to check is equal to the index of the Alignment Vector, in which case, the process proceeds to step 409 for the purpose of considering the next iteration.

If the two indexes are found different, then the process proceeds with step 410 and the checked node is reported as being in No alignment condition with the Alignment vector.

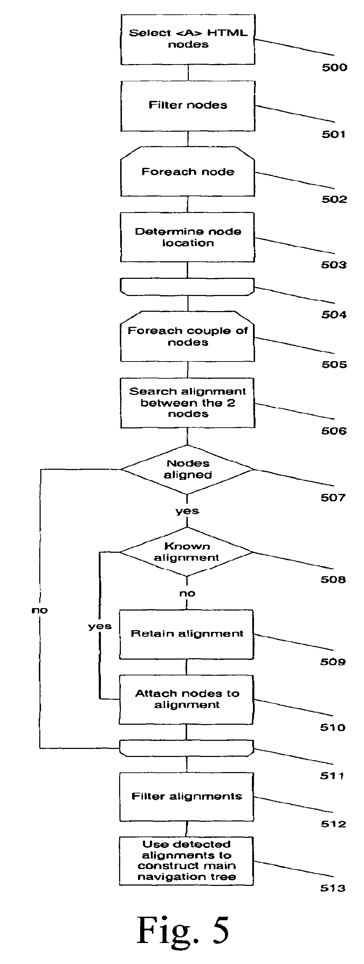

With respect to figure 5, there will now be described an example of a process which can be used for process a whole HTML page, or part of a HTML page, in order to collect all the hyperlink nodes being in alignment.

It should be noticed that, in one preferred embodiment of the invention, the process is carried out within a browser and the Identification path of each node is used for determining a sub-area of the HTML page wherein alignment is to be searched among the different nodes. This demonstrates the powerful possibilities resulting from the extensive use of the Identification Path disclosed in the present patent application.

The process starts with a step 500 which is the detection of all node of the type < A > .

In a step 501, the process performs an optional first filtering step in order to reduce the number of candidate nodes. For instance, one can not be interested in hyperlinks pointing to external web sites. In this case, nodes with attribute *href* starting with "http://" are removed.

In steps 502-503 and 504, the process initiates a loop for the purpose of processing each node and for returning, for each node, the Identification Path characterizing the position of the node.

When all the nodes have been processed, the process then proceeds with a step 505 which is the initialization of a loop for the purpose of processing every combination of two nodes among the set of nodes being checked.

In a step 506, for the current two-nodes set from the loop above, the process determines the alignment, if any, involving those two nodes, identified by their respective Identification Path.

In a step 507, the process checks whether such an alignment has been found and, if this is not the case, the process proceeds with a step 511 which is the completion of the loop and the process then goes back to step 505 for the purpose of testing a new couple of nodes.

If the two considered nodes are found to be in alignment, in step 507, then the process proceeds with a step 508 where the found alignment is one already registered alignment. This is achieved by comparing the Alignment Vectors as defined above.

If the test of step 508 succeeds, then the process proceeds with a step 510 where the nodes are attached to the already known alignments vectors, and the process then goes to step 511.

If the test of step 508 fails, then the process proceeds with a step 509 where the new Alignment Vector is recorded and retained, as a new alignment pattern. Therefore, considering figure 1 as an example, the nodes for "US", "France", "UK" are found to be in a different alignment than the nodes "PRODUCTS", "SERVICES" etc....

When all the node sets have been processed, the process then proceeds with a step 512 where an additional filtering operation is performed on the results. In one preferred embodiment, the filtering is achieved by means of a selection tool, under control of the mouse, which permits the user to disregard some alignments.

Then, in a step 513, the process uses the detected alignments to reconstruct the main navigation tree which is an important step for the purpose of migrating a web site.

A web site is made of several pages, most of these containing hyperlinks to other pages of this site. It is generally admitted as a good practice to organize the pages of a web site with a hierarchical structure. When analyzing a web site for the purpose of its migration toward a new environment, extracting the main navigation tree of the original site is an important step of the whole process. Bringing some level of automation during this step improves the overall efficiency of the task.

It is a common practice, within pages of the site, to provide menus for helping navigation by the site users. A navigation menu is a part of a page dedicated to display a group of hyperlinks with similar visual characteristics. Very often, hyperlinks within a menu point to pages having the same parent page in the site navigation tree.

In figure 1a, the set of buttons 8, 9 and 10 displaying respectively "France", "UK and "USA", can be considered as a menu and it is anticipated that the pages pointed by those buttons have the same parent page in the navigation tree.

The process of correlation detection, applied to hyperlink nodes, permits to identify navigation menus within site pages, by considering that an alignment of hyperlink nodes is a menu. This gives valuable information for reconstructing the navigation tree of a site.

It can be seen how easy it is to manipulate the nodes comprised within a HTML page and for detecting alignment of the latter. Moreover, the process of figure 2a can also be used for enhanced search techniques.

### 2. New search engine technique

With respect to figure 2b, there is now described a new facility search technique which can be adapted to pages drafted in markup languages and which can also be used for pages which are not drafted in markup-languages.

In a step 31, the process starts with storing at least a first and a second key-expressions.

In a step 32, the process proceeds with applying a search engine for retrieving pages containing said at least first and second key-expressions.

In a step 33, the process performs a correlation detection step on each page retrieved in order to detect a correlation between said at least first and second key-expressions within said page.

In response to the detection of said correlation, the process performs in a step 34 a correlation extrapolation step in order to identify additional key expressions.

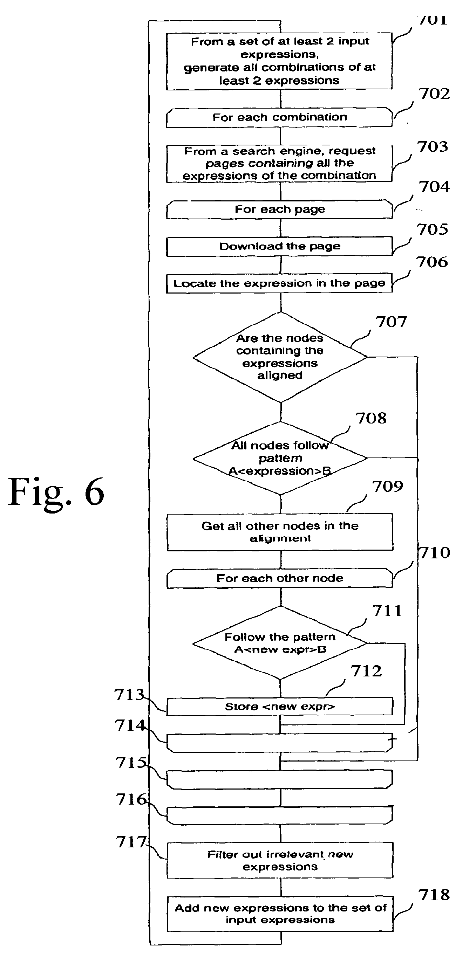

While the general principle of the new search engine is outlined in figure 2b, it will now be described, with respect to figure 6, a preferred embodiment which is particularly adapted to the analysis of pages which are drafted in markup languages.

The process starts with a step 701 which inputs a set of at least two key-expressions and where all combinations of at least two key-expressions of this set are successively considered (step 702).

For each considered combination, the process launches a search in a step 703 with any known search engine and request pages containing all the key-expressions of the combination being considered.

In a step 704, the process initializes a loop for each page being retrieved.

In a step 705, the process downloads the page being retrieved and, in a step 706, it performs the analyzing process defined above for the purpose of identifying any nodes containing one of the key-expressions within the retrieved page.

In a step 707, the process initiates a correlation detection step. To achieve this, in the preferred embodiment, a first step is executed for the purpose of determining whether the nodes containing the search expression (within the considered combination) are aligned and, if not, the process proceeds with a step 715 for the purpose of checking the next page of the iteration loop ...

If all nodes of the combination are found to be aligned in step 707, then the process proceeds with a step 708 where a test is performed to determine whether the text of each of those nodes follows the pattern "A<EXPRESSION>B" where A and B - eventually empty - are constant for each node of the considered combination. For instance, if the combination has the two key-expressions "company1" and "company2" and the texts of the corresponding detected aligned nodes are respectively "the company1 company" and "the company2 company", then the test at step 708 is evaluated as true with A="the " and B=" company".

In a step 709, the process proceeds further with a correlation extrapolation step. To achieve this, in the preferred embodiment, the process retrieves all the nodes in the alignment defined by the Alignment Vector and step 710 is an initialization step for a loop dedicated to test all other nodes.

In a step 711, a test is performed in order to determine whether the text in the other node of the alignment follows the pattern "A<NEW EXPRESSION>B" , where A and B are respectively equal to the values determined at step 708. If this is the case, then NEW EXPRESSION is a new key-expression which will be reused in the searching process

In a step 713, the NEW EXPRESSION is stored.

Steps 714-716 correspond to the completing of the loops initialized respectively in steps 710, 705 and 702.

In a step 717, the process proceeds with a filtering step for the purpose of letting the using filter and disregard some new expressions which he will consider as being irrelevant.

In a step 718, the new expressions which were retrieved and stored in step 713 are added as new possible inputs for the search engine.

While the preferred embodiment clearly shows in figure 6 a detection of correlation based upon the detection of alignment of nodes in a page formalized in a markup language, it should be noticed that this was only an illustrative embodiment. Clearly, any other type of correlation detection step could be used. For instance, there will now be described a so-called pattern based technique which can be used as an another example of embodiment of correlation detection/extrapolation steps . It should be noticed that such pattern based technique will be applicable even for pages not drafted in in markup languages. Considering only the text of the page without any tag structure information, it may be possible to extract the following pattern:
Expr₁ Sep Expr₂ Sep ... Sep Exprₙ
where :
Sep is any one of a collection of words or symbols such as ",", ";", "and", "or", etc ...
and it exists an index i for which Exprᵢ equals one of the input key-expressions
and it exists an index j for which Exprⱼ equals another one of the input key-expressions
If such a pattern can be recognized, then expressions Exprₖ, where 1<=k<=n and k different from i and j, must be considered as candidate new expressions.

More generally, one could extend the correction detection/extrapolation steps 707 - 709 to any type of correlation that may be discovered from at least two input key-expressions and extrapolated to generate new expressions.

The process which was described shows to be very useful for enhancing the search techniques and for discovering words or expressions of a same category, based on at least 2 known words or expressions of this category.

The process is particularly useful when the category is uneasy to express or when it is unknown.

### Sample Implementation

There will be shown, below an example of a java code which can be used for embodying the invention.

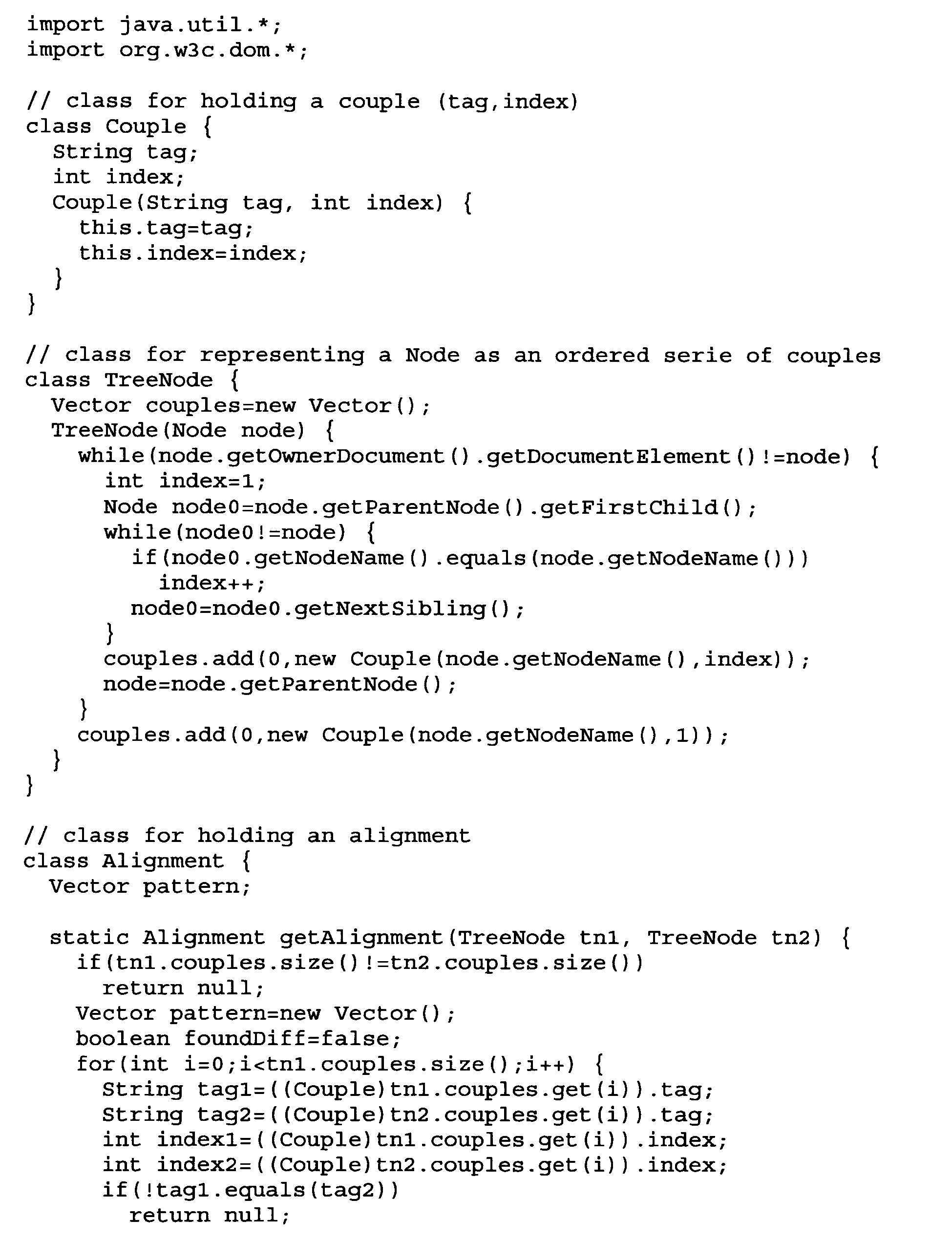

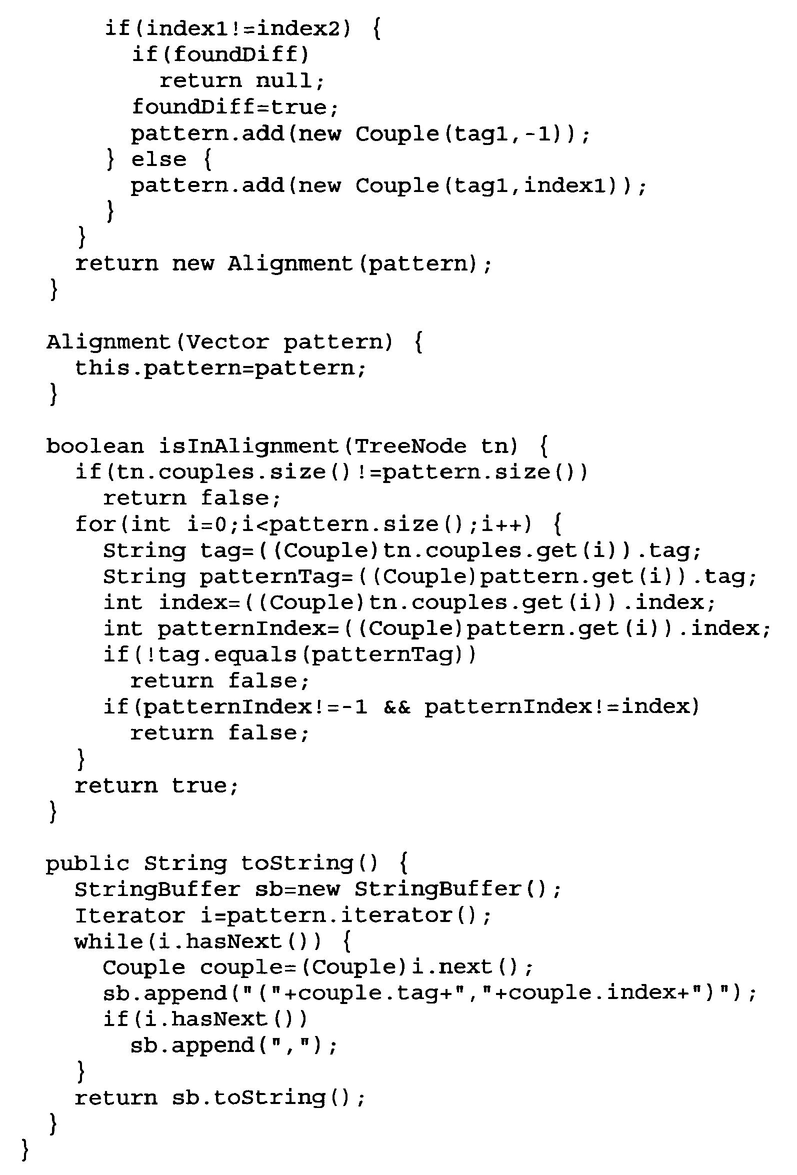

## Claims

1. Process for automatically analyzing a page formalized in a markup language based on a hierarchichal structure comprising tags and for automatically detecting correlation between at least a first and a second node therein included, said process involving the steps of:
- determination (22) of a first Identification Path of said at least first node, said first Identification Path comprising an ordered sequence of couples Ci, where Ci = (TAG, INDEX)
- determination (23) of a second Identification Path of said at least second node, said second Identification Path comprising an ordered sequence of couples C'i, where C'i = (TAG'(i), INDEX' (i))
- performing a comparison (24, 25) of said first Identification and said second Identification Paths in order to determine one unique difference, said difference occurring only in one index INDEX (k);
- upon detection of one unique difference, returning (26) said nodes as being co-related.

2. Process according to claim 1 **characterized in that** it issues one Correlation Vector identifying, with one special mark (*) , the Identification Path representative of said detected correlation.

3. Process according to claim 1 **characterized in that** said page is drafted in Hyper Text Markup Language (HTML).

4. Process according to claim 1 **characterized in that** said page is drafted in an XML based markup language.

5. Process according to claim 3 or 4 **characterized in that** at least one TAG is associated with at least one attribute within said Identification Path.

6. Process according claim 1 **characterized in that** said first and said second Identification Path are formalized in accordance of the XPATH standard.

7. Process according to anyone of the preceding claims **characterized in that** it is used for detecting alignment between at least two nodes contained into said page.

8. Process according to claim 7 **characterized in that** it further involves the step of:
- performing a sequential analysis of all the pages comprised within a web site, said analysis resulting in detection of alignments of hyperlinks existing in said pages;
- in response to said sequential analysis, reconstructing a navigation structure which is representative of said web site.

9. Searching process applicable to a set of pages **characterized in that** if further involves:
- storing at least a first and a second key-expressions ,
- applying a search engine for retrieving pages where said key-expressions are embedded thereinto;
- performing a correlation detection step (707) on each page retrieved in order to detect a correlation between said at least first and second key-expressions within said page;
- in response to the detection of said correlation, performing a correlation extrapolation step in order to identify additional key expressions.

10. Searching process according to claim 9 **characterized in that** said pages are formalized in a markup language based on a hierarchical structure comprising tags, and that the detection of the correlation between said at least first and second key-expressions involves the steps of :
- determination (22) of a first Identification Path of said at least a first node embedding said at least first key-expression, said first Identification Path comprising an ordered sequence of couples Ci, where Ci = (TAG, INDEX)
- determination (23) of a second Identification Path of said at least second node embedding said at least second key-expression, said second Identification Path comprising an ordered sequence of couples C'i, where C'i = (TAG'(i), INDEX' (i))
- performing a comparison (24, 25) of said first Identification and said second Identification Paths in order to determine one unique difference, said difference occurring only in one index INDEX (k);
- upon detection of one unique difference, returning (26) said nodes as being co-related.
